# EUROPÄISCHE PATENTSCHRIFT

(11) **EP 2 337 446 B1**
(45) Veröffentlichungstag und Bekanntmachung des Hinweises auf die Patenterteilung: **17.09.2014**
(21) Anmeldenummer: 09783836.1
(22) Anmeldetag: 08.10.2009
(51) Int. Cl.: A01K 63/00, A01K 63/04

(54) **Fischbeckenanordnung mit zentraler Messvorrichtung**
Fish basin arrangement having a central measuring device
Agencement de bassins à poissons avec un dispositif central de mesure

(30) Priorität: 08.10.2008 DE 202008013222 U
(43) Veröffentlichungstag der Anmeldung: 29.06.2011
(73) Patentinhaber: Big Dutchman International GmbH, 49377 Vechta (DE)
(72) Erfinder: SÜDKAMP, Meik, 49393 Lohne (DE)
(74) Vertreter: Eisenführ Speiser
(86) Internationale Anmeldenummer: PCT/EP2009/063066
(87) Internationale Veröffentlichungsnummer: WO 2010/040793

(56) Entgegenhaltungen:
- WO-A1-2006/042371
- DE-A1- 19 961 142
- US-A- 6 021 664
- US-A- 6 058 763
- US-A1- 2003 104 353
- US-B1- 6 499 431

## Beschreibung

Die Erfindung betrifft eine Fischbeckenanordnung, umfassend eine Vielzahl von Fischbecken und eine Messvorrichtung zur Erfassung von zumindest einem Wasserparameter des Wassers innerhalb der Fischbecken. Ein weiterer Aspekt der Erfindung ist die Verwendung einer Messvorrichtung für eine solche Fischbeckenanordnung und ein Verfahren zur Überwachung einer Mehrzahl von Fischbecken.

Die Überfischung der natürlichen Fischreserven und damit einhergehende Stagnation der Fischereierträge oder sogar deren rückläufige Entwicklung erfordert eine Verlagerung der Fischproduktion in andere Bereiche und eine Weiterentwicklung solcher alternativer Fischproduktionsmethoden.

Grundsätzlich eröffnen die Möglichkeiten der Fischaufzucht und -mast in Aquakulturen eine sinnvolle Alternative zum Fischfang aus dem natürlichen Fischbestand und ermöglichen somit eine Schonung des natürlichen Fischbestands. Im Laufe der Geschichte haben sich mehrere Haltungssysteme zur Erzeugung von aquatischen Organismen entwickelt. Hierzu zählen die klassische Teichwirtschaft, Rinnenanlagen, Netzgehege und Kreislaufanlagen. Die Produktion in der Aquakultur ist in den vergangenen Jahren weltweit stetig gestiegen, während im Bereich der Fischerei die Erträge aufgrund unkontrollierten Fischfangs und der Verschmutzung der Gewässer stagnieren.

Insbesondere in Kreislaufanlagen, zu gewissen Teilen aber auch innerhalb anderer Haltungssysteme (Teich-, Rinnen- oder Netzgehegeanlagen), stellt eine besondere Herausforderung die Sicherstellung abiotischer Parameter dar. Hierzu zählt im Besonderen die konstante Aufrechterhaltung guter Wasserqualität, im Haltungssystem. Es ist aus DE 195 21 037 A1 bekannt, ein Fischbecken in dreiteiliger Bauweise aufzubauen, wobei es einen Sedimentationsbereich, einen Bioreaktorbereich und einen zwischen diesen beiden Bereichen liegenden Fischaufenthaltsbereich umfasst. Die drei Bereiche werden in der durch die geometrische Anordnung vorgegebenen Reihenfolge vom Bioreaktorbereich in den Fischaufenthaltsbereich und weiter zum Sedimentationsbereich mit einer konstanten Wasserströmung durchströmt. Hierbei wird einerseits im Sedimentationsbereich eine Ablagerung von Feststoffen aus dem Wasser erzielt, die dann über eine am Boden des Sedimentationsbereichs angeordnete Abführleitung aus dem Kreislauf entfernt werden können. Zudem wird im Bioreaktorbereich eine Anreicherung des Wassers mit Sauerstoff durch Lufteinblasung erzielt und durch Mikroorganismen ein intensiver Abbau der organischen Stoffe erreicht.

Allerdings können umweltbedingte Einflüsse, das Wachstum der Fischpopulation im Fischbecken und andere, temporär auftretende Ereignisse, wie beispielsweise ein Fütterungsvorgang in periodischer Form, dazu führen, dass die für die Gesundheit und Entwicklung der Fische wichtigen Parameter des Wassers wie z. B. Sauerstoff, pH-Wert, Nitritkonzentration schwanken und sich aus einem optimalen Bereich herausbewegen.

Es ist zur Vermeidung dieses Nachteils bekannt, in regelmäßigen Zeitabständen eine Wasserprobe aus einem Fischbecken zu entnehmen und diese Wasserprobe einer Analyse zu unterziehen um auf Grundlage dieser Analyse Einfluss auf diese Parameter zu nehmen. Allerdings hat dies den Nachteil, dass bei großen Aquakulturen mit mehreren Fischbecken eine Analytik jedes einzelnen Fischbeckens in der erforderlichen Frequenz zu einem unwirtschaftlichen Betrieb der Aquakultur unwirtschaftlich würde.

Eine Fischbeckenanordnung gemäß dem Oberbegriff des unabhängigen Anspruchs 1 ist aus DE 19 961 142 A1 bekannt.

Der Erfindung liegt die Aufgabe zugrunde, eine Fischbeckenanordnung bereitzustellen, welche eine vereinfachte und zugleich wirtschaftliche Überwachung der für die Qualität des Wassers im Fischbecken maßgeblichen Parameter ermöglicht.

Diese Aufgabe wird erfindungsgemäß gelöst, indem eine Fischbeckenanordnung der eingangs genannten Art bereitgestellt wird, bei der die Messvorrichtung die Merkmale des kennzeichnenden Teils des Anspruchs 1 umfasst.

Mit der erfindungsgemäßen Fischbeckenanordnung werden eine Reihe von Vorteilen erzielt. Zum einen wird die manuelle Probenentnahme aus einem Fischbecken und deren Analyse dahingehend vereinfacht, als dass über eine Probenentnahmeleitung das Probenwasser aus dem jeweiligen Fischbecken bezogen und unmittelbar einer Messeinheit für die Analyse zugeführt werden kann. Dies ermöglicht grundsätzlich einen automatisierten Ablauf der Wasser-analyse, der keinen manuellen Eingriff benötigt und somit auch derart gesteuert werden kann, dass in regelmäßigen, vorherbestimmten Zeitabständen eine Analyse des Wassers durchführbar ist.

Dabei ist zu verstehen, dass es sich bei den Fischbecken gemäß der Erfindung um Aufzuchtbecken handelt. Diese haben typischerweise und vorzugsweise ein Gesamtvolumen von 15-23m³, vorzugsweise 20m³. Davon entfallen typischerweise auf Bioreaktorbereich 4-6m³, insbesondere 5m³, auf Fischaufenthaltsbereich 8-12m³, insbesondere 10m³, und auf Sedimentationsbereich 3-5m³, insbesondere 4m³.

Zum anderen vermeidet die erfindungsgemäße Fischbeckenanordnung aber den Nachteil, dass bei einer solchen automatisierten Messtechnik eine Vielzahl von Sensoren erforderlich wird, um jedes Becken zu überwachen. Stattdessen wird gemäß eines Merkmals der Erfindung eine schaltbare Probenwasserleitvorrich-tung bereitgestellt, mit der die Proben aus mehreren Fischbecken selektiv zu einer einzigen Messeinheit geleitet und darin analysiert werden können. Damit wird es einerseits möglich, die Anzahl der für die Analyse einer Mehrzahl von Fischbecken benötigten Sensoren maßgeblich zu reduzieren, indem jeweils nur ein Sensor für jede Messaufgabe benötigt wird, wie beispielsweise nur ein Temperatursensor, ein pH-Sensor u.s.w. Zudem wird hiermit ermöglicht, aufwendige Analyseverfahren ohne entsprechend mehrfach bereitgestellte teure Sensorik bereitzustellen, da die Investition in nur eine Sensorik sich auf mehrere Fischbecken bezieht.

Die erfindungsgemäß vorgesehene schaltbare Probenwasserleitvorrichtung kann insbesondere eine Anzahl von Anschlüssen für periphere Messleitungen aufweisen, die der Anzahl von Fischbecken entspricht, die messtechnisch erfasst werden sollen. Grundsätzlich ist es zwar bevorzugt, dass alle Fischbecken einer Fischbeckenanordnung messtechnisch separat erfasst werden, sofern jedoch ein Wasserkreislauf durch die Fischbecken mit konstanter Durchströmung besteht und die Fischbecken auf diese Weise miteinander in ständigem Wasseraustausch stehen, kann eine ausreichende Überwachung gegebenenfalls auch erreicht werden indem nicht jedes, sondern nur eine Auswahl von Fischbecken, beispielsweise nur jedes zweite Fischbecken, messtechnisch überwacht wird.

Die Anschlüsse für periphere Messleitungen sind ausgebildet, um mit einem entsprechenden Schaltorgan innerhalb der schaltbaren Probenwasserleitvorrichtung zusammen zu wirken. Hiermit kann das Haltungswasser aus jeder beliebigen peripheren Messleitung zu der Zentralmessleitung durchgeleitet werden und hierdurch bei allen anderen an die schaltbare Probenwasserleitvorrichtung angeschlossenen peripheren Messleitungen gesperrt werden. Eine solche Probenwasserleitvorrichtung kann beispielsweise durch ein schaltbares Mehrwegeventil ausgebildet werden, welches einen von einer Vielzahl von Anschlüssen, wahlweise auf einen Zentralanschluss aufschaltet und hierbei alle anderen Anschlüsse sperrt. Alternativ kann auch jeder der Anschlüsse der peripheren Messleitungen innerhalb der Probenwasserleitvorrichtung auf ein Absperrventil und hinter diesem Absperrventil in eine Sammelleitung geleitet werden, die dann in die zentrale Messleitung mündet. In diesem Fall kann durch Öffnen nur eines der Absperrventile das Probenwasser aus der entsprechend an dieses Absperrventil angeschlossenen peripheren Messleitung über den Verteiler der Zentralmessleitung zugeführt werden, wohingegen alle anderen Absperrventile geschlossen bleiben. Andere Ausführungsformen der Probenwasserleitvorrichtung sind in bestimmten Anwendungsfällen vorteilhaft und von der Erfindung mit umschlossen.

Die erfindungsgemäße Fischbeckenanordnung ermöglicht insbesondere die Anordnung der gesamten Sensorik in einem separaten, von den Fischbecken getrennten Raum, welcher beispielsweise auch andere Steuer- und Regelungsgeräte der Fischbeckenanordnung umfassen kann. Diese, zum zentralen Messraum führenden Messleitungen, können, je nach Größe und Anzahl der Fischbecken, innerhalb der Fischbeckenanordnung, eine erhebliche Länge einnehmen. Dabei kann die schaltbare Probenwasserleitvorrichtung in unmittelbarer Nähe zu den Fischbecken angeordnet sein und die zentrale Messleitung sich von dort ausgehend zu der zentralen Messeinheit erstrecken, oder es können sich alle peripheren Messleitungen bis in den Raum, in dem die zentrale Messeinheit angeordnet ist, erstrecken und dann auch die schaltbare Probenwasserleitvor-richtung innerhalb dieses Raums angeordnet sein.

Des Weiteren ist auch durch Aufteilung der Probenwasserleitvorrichtung in mehrere separate Probenwasserleitvorrichtungen eine entsprechende Mischform möglich, bei der beispielsweise zunächst die peripheren Messleitungen einer bestimmten Anzahl von Fischbecken einer ersten, schaltbaren Probenwasserleitvorrichtung zugeführt werden, die dann ihrerseits an eine zweite Probenwasserleitvorrichtung angeschlossen ist, an die wiederum andere Probenwasserleitvorrichtungen angeschlossen sind, die über periphere Messleitungen mit anderen Fischbecken verbunden sind. Von der zweiten schaltbaren Probenwasserleitvorrichtung kann dann eine entsprechende Zentralmessleitung zu der Messeinheit geführt werden. In diesem Fall erfolgt die Leitung des Probenwassers von einem Fischbecken über aufeinanderfolgend zwei schaltbare Probenwasserleitvorrichtungen zu der Messeinheit und es ist zu verstehen, dass eine entsprechende Schaltung der beiden Probenwasserleitvorrichtungen für die Messung jedes einzelnen Fischbeckens vorgenommen werden muss.

Eine erste bevorzugte Ausführungsform der erfindungsgemäßen Fischbeckenanordnung zeichnet sich dadurch aus, dass die Messeinheit
- zumindest einen physikalischen Messsensor umfasst, welche einen Parameter des Probenwassers unmittelbar in ein elektrisches Signal umwandelt, insbesondere einen pH-Sensor, einen Sauerstoffsensor, einen Gasdrucksensor, welcher den Gesamtgasdruck des Haltungswassers, als Summe der Partialdrücke, gegen den umgebenden Luftdruck erfasst, und/oder einen Temperatursensor, und/oder
- zumindest eine nasschemische Messeinheit, welche einen Parameter des Probenwassers nach Zugabe zumindest eines Reagenz in ein elektrisches Signal umwandelt, insbesondere eine Messeinheit zur Erfassung des Orthophosphat- (PO₄³⁻) und Gesamtphosphatgehalts, eine Messeinheit zur Erfassung des Hydrogencarbonatgehalts (CaCO₃, HCO₃), eine Messeinheit zur Erfassung des einzelner Stickstoffverbindungen (Ammonium-, Nitrit-, und Nitratgehalt) und des Gesamtstickstoffgehalts und eine Messeinheit zur Erfassung aller organischen Kohlenstoffverbindungen (TOC; total organic carbon).

Diese bevorzugte Ausführungsform kombiniert physikalische mit nasschemischen Analyseverfahren, was insbesondere für die erfindungsgemäße Fischbeckenanordnung vorteilhaft ist, da hier eine Vielzahl von Fischbecken mit einem einzelnen Sensor des jeweiligen Analysetyps messtechnisch überwacht werden können. Dabei ist zu verstehen, dass die Sensoren und Messeinheiten in Reihe oder parallel.zur Durchströmung der gesamten Messeinheit angeordnet sein können, beispielsweise indem bestimmte Sensoren oder Messeinheiten in einem Bypass zur eigentlichen Durchführung oder diskontinuierlichen Abzweigung des Probenwassers angeordnet sind. Die Sensoren oder Messeinheiten können dabei sowohl kontinuierlich messend als auch diskontinuierlich messend sein.

Noch weiter ist es bevorzugt, wenn die Messeinheit über zumindest eine Rücklaufleitung mit einem Fischbecken strömungstechnisch verbunden ist, um eine Rückführung des Probenwassers zu ermöglichen.

Diese Ausführungsform gestattet eine Rückführung des für die Analyse und gegebenenfalls auch vorhergehende Spülung der Messeinheit aus den Fischbecken entnommenen Wassers und reduziert daher im Gegensatz zu Anordnungen, bei denen das zur Analyse verwendete Wasser verworfen wird, die Notwendigkeit einer erhöhten Frischwasserzufuhr zu den Fischbecken.

Dabei ist es besonders bevorzugt, wenn ein Ozongenerator vorgesehen ist, der in Strömungsrichtung zwischen Messeinheit und Fischbecken in die Rücklaufleitung eingesetzt ist zur Entkeimung des zurückströmenden Wassers. Diese Ausgestaltung eignet sich insbesondere dann, wenn mehrere Fischbecken messtechnisch überwacht werden und das hierzu entnommene Probenwasser eines Fischbeckens nicht zwangsläufig in dasselbe Fischbecken zurückgeführt wird, um eine durch die Probenentnahme erfolgende Verbreitung von Erkrankungen in den Populationen der einzelnen Fischbecken zu verhindern und um zugleich etwaige Keime, die im Zuge der Analyse in das Probenwasser geraten, abzutöten.

Noch weiter ist es bevorzugt, wenn die erfindungsgemäße Fischbeckenanordnung fortgebildet wird durch eine schaltbare Rücklaufwasserleitvorrichtung, die mittels einer Zentralrücklaufleitung mit der Messeinheit zur Rückleitung von Probenwasser strömungstechnisch verbunden ist, eine Vielzahl von peripheren Rücklaufleitungen, von denen jede die schaltbare Rücklaufwasserleitvorrichtung mit jeweils einem Fischbecken oder einem aus mehreren Fischbecken bestehenden Kreislauf zur Rückleitung von Probenwasser strömungstechnisch verbin-det, wobei die schaltbare Rücklaufwasserleitvorrichtung ausgebildet ist, um selektiv Probenwasser aus der Zentralrücklaufleitung einer peripheren Rücklaufleitung zuzuführen. Diese Ausführungsform ermöglicht es, dass das Probenwasser jeweils gezielt demjenigen Becken wiederum zugeführt wird, aus dem es entnommen wurde, oder zumindest einem Becken, welches diesem Becken benachbart ist oder im gleichen Kreislauf wie das Fischbecken angeordnet ist, aus dem das Probenwasser entnommen wurde. Dabei wird in gleicher Weise auf eine schaltbare Leitvorrichtung zurückgegriffen, wie bei der Probenentnahme und hierdurch eine entsprechende Zuordnung des rückzuführenden Probenwassers erreicht. Dabei ist zu verstehen, dass die Anzahl der peripheren Rücklaufleitungen nicht notwendigerweise mit der Anzahl der peripheren Messleitungen über-einstimmend sein muss, sondern es insbesondere auch für die Funktionalität ausreichend sein kann, wenn zwar für jedes Fischbecken eine periphere Messleitung vorhanden ist, aber die peripheren Rücklaufleitungen in geringerer Anzahl nur für eine jeweils zusammengefasste Anzahl von Fischbecken vorhanden sind, welche in einem Kreislauf zusammengeschlossen sind.

Noch weiter ist es bevorzugt, wenn die Fischbecken, die peripheren Messleitungen und die Zentralmessleitung so angeordnet sind, dass die Zufuhr des Probenwassers aus den Fischbecken zur Messeinheit durch Schwerkrafteinfluss erfolgt und die Messvorrichtung in Strömungsrichtung vor einer Pumpe zur Förderung dieses Probenwassers angeordnet ist, die als Druckpumpe ausgelegt ist. Diese Ausführungsform vermeidet es, dass zwischen Fischbecken und Messeinheit eine Fördereinrichtung, wie beispielsweise eine Pumpe oder dergleichen, angeordnet sein muss, um das Probenwasser von den Fischbecken zu der Messeinheit zu befördern. Stattdessen erfolgt der Fluss des Probenwassers vom Fischbecken bis zur Messeinheit alleine aufgrund von Schwerkrafteinfluss, was insbesondere Verfälschungen bestimmter Parameter, wie beispielsweise des Gasdrucks innerhalb der Flüssigkeit, verhindert. Zur weiteren Förderung des Probenwassers, sei es zwecks Rückführung in eines der Fischbecken oder zwecks Entsorgung des Probenwassers, ist hinter der Messvorrichtung eine Druckpumpe bereitgestellt, die ihrerseits das ihr durch Schwerkrafteinfluss zufließende Wasser gegen dahinterliegende Strömungs- oder Steigungswiderstände fördern kann, die jedoch keine Druckeinflüsse auf den Probenwasserzuflussweg ausübt, was wiederum für eine unverfälschte Messung vorteilhaft ist.

Gemäß einer weiteren bevorzugten Ausführungsform wird die erfindungsgemäße Fischbeckenanordnung weitergebildet durch eine Messteuerungseinheit, welche mit der schaltbaren Probenwasserleitvorrichtung und der Messeinheit signaltech-nisch verbunden und ausgebildet ist, um für jedes der Fischbecken, das über eine periphere Messleitung mit der schaltbaren Probenwasserleitvorrichtung strömungstechnisch verbunden ist, folgende aufeinanderfolgende Schritte auszuführen:
a. Senden eines ersten Schaltsignals an die schaltbare Probenwasserleitvorrichtung zur Durchleitung von Probenwasser aus der peripheren Messleitung des jeweiligen Fischbeckens in die Zentralmessleitung,
b. ggfs. Senden eines Startsignals an die Messeinheit zum Veranlassen einer Messung in der Messeinheit,
c. Erfassen der Messwerte der Messeinheit und Abspeichern und/oder Weiterleiten dieser Messwerte,
d. wobei die Messteuerungseinheit ausgebildet ist, um gegebenenfalls zuvor ein zweites Schaltsignal an die schaltbare Rücklaufwasserleitvorrichtung zu senden, zur Durchleitung von Probenwasser aus der Zentralrücklaufleitung, an die dem jeweiligen Fischbecken zugeordnete periphere Rücklaufleitung, und
e. wobei die Messteuerungseinheit vorzugsweise eine Zeitverzögerungseinheit umfasst und ausgebildet ist, um zwischen dem Senden des ersten Schaltsignals und dem Senden des Startsignals eine durch die Zeitverzögerungseinheit vorbestimmte Zeitspanne verstreichen zu lassen, die ausreichend ist, um die Zentralmessleitung und die Messeinheit vollständig mit Probenwasser aus dem zu messenden Fischbecken zu füllen,
wobei die Messteuerungseinheit ausgebildet ist, um die Schritte a-c und ggfs. d und/oder e für jedes der Fischbecken aufeinanderfolgend durchzuführen.

Mit dieser Fortbildung wird eine automatisierte Überwachung der Wasserqualität in einer Fischbeckenanordnung mit mehreren Fischbecken mittels einer zentralen Messeinheit und einer Messsteuerungseinheit ermöglicht, die die aufeinan-derfolgenden Probenentnahmen und Analysen dieser Proben aus den einzelnen Fischbecken steuert. Dies kann so ausgestaltet werden, dass zunächst in einem ersten Messzyklus unmittelbar aufeinanderfolgend alle Fischbecken nacheinander analysiert werden, wobei der Abstand zwischen zwei solcher Analysen zumindest der erforderlichen Zeitspanne entspricht, die für eine Analyse eines Fischbeckens und das nachfolgende Durchspülen der Messleitung erforderlich ist. Diesem ersten Messzyklus kann dann in einem vorbestimmten Zeitabstand, beispielsweise zwei Stunden, ein zweiter und entsprechend weitere Messzyklen folgen, in denen wiederum jeweils jedes Fischbecken analysiert wird. Grundsätzlich muss dabei nicht in jedem Messzyklus jeder Wasserparameter überprüft werden, sondern bestimmte Wasserparameter, insbesondere solche, die sich im normalen Betriebsablauf nicht kurzfristig ändern, können auch nur bei jedem zweiten, dritten oder dergleichen Messzyklus analysiert werden.

Noch weiter ist es bevorzugt, wenn eine Regeleinheit bereitgestellt ist, welche mit der Messeinheit signaltechnisch verbunden ist, und ausgebildet ist, um die Messwerte der Messeinheit mit Sollwerten zu vergleichen und bei Abweichen der Messwerte von den Sollwerten ein Signal auszugeben, das signalisiert, welcher Messwert abweichend ist. Mit dieser Fortbildung wird nicht nur eine automatisier-te Messung der Wasserqualität erreicht, sondern auch eine gezielte Korrektur einer etwaig vom Soll-Wert abweichenden Wasserqualität eröffnet. Dabei kann das ausgegebene Signal insbesondere dazu genutzt werden, um einem Bediener der Fischbeckenanordnung die erforderliche Zugabe bestimmter Stoffe hinsichtlich deren Art und Menge zu signalisieren. Weiterhin ist es möglich, die von der Regeleinheit ausgegebenen Signale dazu zu verwenden, bestimmte Parameter, wie beispielsweise die Frischwasserzufuhr zu einem Fischbecken oder die Luftzufuhr in dem sauerstoffanreichernden Bioreaktorteil zu erhöhen oder abzusenken, um hierdurch die Wasserqualität bezüglich bestimmter Parameter in dem Soll-Wertbereich zu halten.

Dabei ist es insbesondere bevorzugt, wenn die Regeleinheit ausgebildet ist, um eine Stellgröße für eine Stoffzufuhr zu dem gemessenen Fischbecken auszugeben, die so ausgebildet ist, dass bei Zugabe des Stoffes zu dem Fischbecken der gemessene Parameter in Richtung des Sollwerts, vorzugsweise auf den Sollwert, verändert wird, wobei die Regeleinheit vorzugsweise mit einer Dosiereinheit zur Zudosierung des Stoffes signaltechnisch gekoppelt ist. Hierdurch wird einerseits einem Benutzer der Fischbeckenanordnung die Einhaltung einer guten Wasser-qualität erleichtert und andererseits eine weitergehende Automatisierung der Überprüfung und Einhaltung der Wasserqualität erzielt, indem insbesondere durch eine Dosiereinheit die erforderliche Zufuhr in erhöhtem oder verringertem Maße bestimmter Stoffe, wie beispielsweise Frischwasser oder chemischer oder biologischer Reaktanden, zu Fischbecken oder einem durch die Fischbecken gebildeten Wasserkreislauf erfolgt.

Gemäß einer weiteren bevorzugten Ausführungsform ist vorgesehen, dass die Mehrzahl von Fischbecken oder einige der Fischbecken zu einem quasi-geschlossenen Wasserkreislauf miteinander verbunden sind. Hierbei kann die Regeleinheit ausgebildet sein, um eine Stellgröße für eine Stoffzufuhr zu einem Fischbecken auszugeben, welches dem gemessenen Fischbecken im Wasserkreislauf strömungstechnisch unmittelbar vorausgeht, wobei die Regeleinheit vorzugsweise mit einer Dosiereinheit zur Zudosierung des Stoffes zu dem Fischbecken, welches dem gemessenen Fischbecken im Wasserkreislauf strömungstechnisch unmittelbar vorausgeht, signaltechnisch gekoppelt ist. Diese Ausführungsform betrifft Fischbeckenanordnungen, in denen mehrere Fischbecken so miteinander in strömungstechnischer Verbindung stehen, dass das aus einem Fischbecken abgeführte Wasser einem anderen Fischbecken zugeführt wird. Ein solcher Wasserkreislauf kann insbesondere hergestellt werden, indem mehrere Fischbecken, der aus DE 195 21 037 A1 vorbekannten Weise, solcherart miteinander gekoppelt werden, dass jeweils das aus dem Bypassbereich zum Sedimentationsbereich abgeführte Wasser dem Bioreaktorbereich eines benachbarten Beckens zugeführt wird und auf diese Weise ein in sich geschlossener Kreislauf von zwei oder mehr Fischbecken gebildet wird. In einem solchen Kreislauf kann zwar regelmäßig auch durch Erhöhung oder Verringerung der Zufuhr bestimmter Stoffe in ein bestimmtes Fischbecken die Wasserqualität in diesem bestimmten Fischbecken reguliert werden. In gewissen Anwendungsfällen und insbesondere bei plötzlichen Ist-Wertabweichungen vom Soll-Wert in größerer Ordnung, ist es jedoch in solchen Kreisläufen vorteilhaft, wenn zusätzlich oder nur eine Regulierung der Stoffzufuhr in einem Fischbecken erfolgt, welches demjenigen Fischbecken im Wasserkreislauf strömungstechnisch vorausgelagert ist, insbesondere unmittelbar vorausgelagert ist, um dessen Wasserqualität zu beeinflussen. Hierdurch kann insbesondere bei Regelvorgängen, die eine zeitverzögerte biologische Reaktion nach sich ziehen, eine genauere Einhaltung der Soll-Werte erreicht werden.

Schließlich ist bei einer weiteren bevorzugten Ausführungsform mit einer Rücklaufleitung zur Rückführung des Probenwassers vorgesehen, dass eine Zuleitung zur Zudosierung von Reagenzstoffen zur Regelung der Wasserqualität in die Rücklaufleitung mündet, vorzugsweise in Strömungsrichtung vor einer schaltbaren Rücklaufwasserleitvorrichtung, welche selektiv rücklaufendes Probenwasser in eine von einer Vielzahl peripherer Rücklaufleitungen leitet, und diese insbesondere mit einer automatisierten Zudosierungseinheit verbindet. Eine solcherart vorgesehene Zuleitung zur Zudosierung ermöglicht es, Reagenzstoffe, die der Wiederherstellung der gewünschten Wasserqualität bezüglich eines oder mehrerer konkreter Wasserparameter dienen, der Fischbeckenanordnung zuzuführen. Dabei kann im einfachsten Fall einer zu einem Gesamtkreislauf zusammengeschlossenen Mehrzahl von Fischbecken der benötigte Reagenzstoff zugeführt werden, indem dieser in eines der Mehrzahl von Fischbecken über die Rücklaufleitung zudosiert wird. Diese Ausgestaltung kann weitergebildet werden, indem das über die Rücklaufleitung zurückgeführte Probenwasser mittels einer Rücklaufwasserleitvorrichtung in unterschiedliche Fischbecken gezielt rückgeführt wird, wodurch es ermöglicht wird, die Reagenzstoffe gezielt einem Fischbecken aus einer Mehrzahl von Fischbecken, die über entsprechend periphere Rücklaufleitungen mit der Rücklaufwasserleitvorrichtung und hierüber mit der Rücklaufleitung und der Zudosierungseinheit verbunden sind, zugeführt wird. Diese Fortbildung ermöglich es, eine Mehrzahl von Fischbeckenanordnungen, die jeweils einen Kreislauf darstellen bzw. eine Fischbeckenanordnung, welche mehrere Kreisläufe von jeweils zwei oder mehr Fischbecken umfasst, mit entsprechenden Reagenzstoffen gezielt zu beaufschlagen, um die Wasserqualität in jedem einzelnen der Wasserkreisläufe gezielt zu regeln. Insbesondere kann diese Ausführungsform so ausgestaltet sein, dass ein oder mehrere Reagenzstoffe gezielt in jedes Fischbecken der Fischbeckenanordnung zudosiert werden kann, insbesondere mittels der zuvor erläuterten Verteilereinrichtung und den peripheren Rücklaufleitungen, um auf diese Weise gezielt die Wasserqualität in jedem einzelnen Fischbecken beeinflussen zu könnten.

Ein weiterer Aspekt der Erfindung betrifft die Verwendung einer Messvorrichtung für eine Anordnung einer Vielzahl von Fischbecken gemäß Anspruch 12.

Diese Messvorrichtung entspricht hinsichtlich ihrer technischen Ausgestaltung der Messvorrichtung der zuvor beschriebenen Fischbeckenanordnung und eignet sich insbesondere dazu, um eine Anordnung mehrerer Fischbecken solcher Art mit einer Messtechnik auszurüsten, die eine zuverlässige Überwachung der Wasserqualität ermöglicht.

Die erfindungsgemäße Fischbeckenanordnung kann insbesondere nach einem Verfahren zur Überwachung einer Mehrzahl von Fischbecken gemäß Anspruch 13 betrieben werden, welches die Schritte umfasst:
- Schalten der schaltbaren Probenwasserleitvorrichtung zur Weiterleitung des Probenwasser aus einer peripheren Probenwasserleitung in eine Zentralmessleitung,
- Leiten von Probenwassers aus einem Fischbecken über die periphere Probenwasserleitung und die Zentralmessleitung zu einer Messeinheit
- Messen von zumindest einem Wasserparameter des Fischbeckens in der Messeinheit,
- ggfs. Rückleiten des Probenwassers in das Fischbecken,
- Schalten der schaltbaren Probenwasserleitvorrichtung zur Weiterleitung des Probenwassers aus einer weiteren peripheren Probenwasserleitung in die Zentralmessleitung,
- Leiten von Probenwasser aus einem weiteren Fischbecken über die weitere periphere Probenwasserleitung zu der Messeinheit,
- Messen von zumindest einem Wasserparameter des weiteren Fischbeckens in der Messeinheit,
- ggfs. Rückleiten des Probenwassers in das weitere Fischbecken.

Mit diesem Verfahren wird eine besonders effiziente Qualitätsüberwachung mehrerer Fischbecken durch eine einzige zentrale Messeinheit ermöglicht, was einerseits einen wirtschaftlichen Betrieb solcher mehrerer Fischbecken ermöglicht und andererseits eine Anwendung weitergehender und aufwendiger Analyseverfahren in der Aquakultur-Fischzucht und -Mast eröffnet.

Dabei kann das Verfahren insbesondere dadurch ausgezeichnet sein, dass zwischen dem Schalten der schaltbaren Probenwasserleitvorrichtung und dem Messen des zumindest einen Wasserparameters, eine vorbestimmte Zeitverzögerung erfolgt, die ausreichend ist, um die Messeinheit vollständig mit Probenwasser aus dem zu messenden Fischbecken zu füllen. Diese Fortbildung ermöglicht es, dass bei zwei aufeinanderfolgenden Messvorgängen an unterschiedlichen Fischbecken das aus der vorhergehenden Messung stammende Probenwasser innerhalb der Zuleitungen und der Messeinheit zunächst entfernt und die Messleitungen und Messeinheiten vollständig mit dem Probenwasser des darauffolgenden, zu messenden Fischbeckens, gefüllt werden, bevor eine Messung durchgeführt wird. Hierdurch werden Verfälschungen der Messwerte durch Beeinflussung oder Mischung der Probenwasser untereinander verhindert.

Eine bevorzugte Ausführungsform der Erfindung wird anhand der Figuren erläutert. Es zeigen:
- Fig. 1:: einen Aufbau einer erfindungsgemäßen Fischbeckenanordnung mit sechs Fischbecken, die in einem Kreislaufsystem angeordnet sind, mit einer schematischen Darstellung der Zirkulation des Wassers, der Wasserabfuhr und der Frischwasserzufuhr, und
- Fig. 2:: eine schematische Darstellung der Probenwasserentnahme und der analytischen Vorrichtungen der Fischbeckenanordnung gemäß Figur 1.

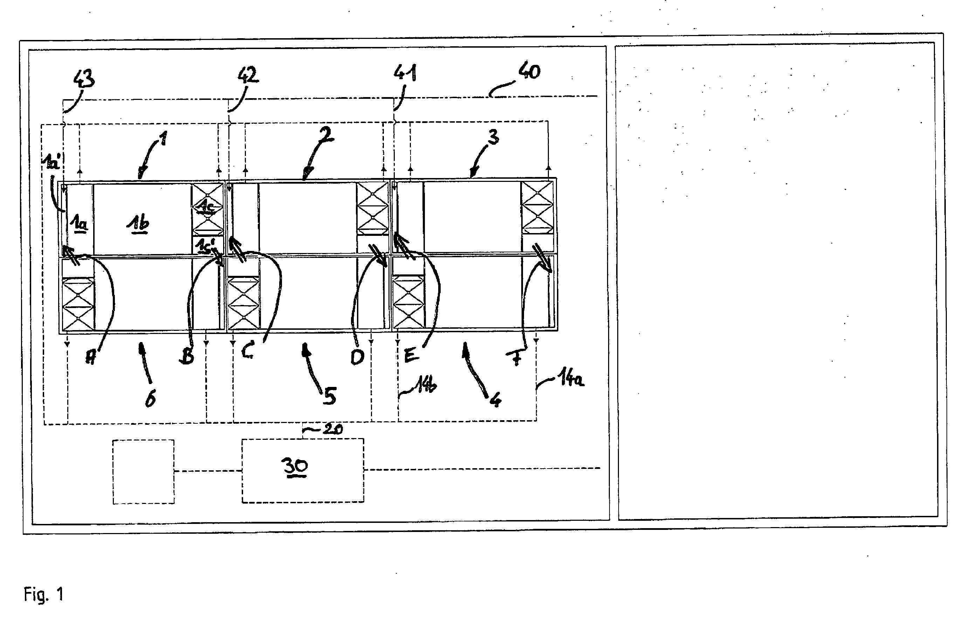

Bezug nehmend zunächst auf Figur 1 weist eine erfindungsgemäße Fischbeckenanordnung einer bevorzugten Ausführungsform insgesamt sechs Fischbecken 1-6 auf, die in zwei Reihen zu je drei Fischbecken 1-3, 4-6 unmittelbar benachbart zueinander angeordnet sind. Dabei ist zu verstehen, dass die kleinste Einheit eines Moduls aus 2 Becken modulare Bauweise besteht und die modulare Bauweise es erlaubt, dass die nächste Größe eines Moduls aus 4 Becken bestehen würde. Die nächste Größe wäre dann 6 Becken usw.

Jedes Fischbecken ist, wie beispielhaft anhand des links oben angeordneten Fischbeckens 1 beziffert, in einen Bioreaktorbereich 1a mit Zulaufschacht 1a', einen Fischaufenthaltsbereich 1b und einen Sedimentationsbereich 1c mit Bypassbereich 1c' unterteilt. Wie ersichtlich, sind die Fischbecken einer Reihe gleichsinnig derart angeordnet, dass neben dem Sedimentations- und Bypassbereich eines Fischbeckens der Zulaufschacht des Bioreaktorbereichs eines benachbarten Beckens der gleichen Reihe angeordnet ist. Demgegenüber sind die Fischbecken der beiden Reihen zueinander gegenläufig angeordnet, so dass der Bypassbereich des Sedimentationsbereichs eines Fischbeckens einer Reihe dem Zulaufschacht und Bioreaktorbereich eines Fischbeckens der benachbarten Reihe gegenüberliegt.

Die beiden in Figur 1 links dargestellten Fischbecken 1 und 6 sind zu einem geschlossenen Wasserkreislauf miteinander verbunden indem jeweils aus dem Bypassbereich des Sedimentationsbereichs eines Beckens das Wasser in den Zulaufschacht des Bioreaktorbereichs des anderen Beckens geleitet wird, wie durch die Pfeile A, B gekennzeichnet. In gleicher Weise sind die beiden mittleren Fischbecken 2, 5 zu einem geschlossenen Wasserkreislauf verbunden, wie durch die Pfeile C, D gekennzeichnet und die beiden rechten Fischbecken 3, 4, wie durch die Pfeile E, F gekennzeichnet. Auf diese Weise ist die im Ausführungsbeispiel gezeigte Fischbeckenanordnung in drei einzelne Kreisläufe aus jeweils zwei Fischbecken aufgeteilt. Der Vorteil dieser Art der Aufteilung besteht darin, dass einerseits eine insgesamt hinsichtlich des Wasservolumens kleine zu regelnde Wassermenge in einem Einzelkreislauf vorliegt, die durch entsprechend kleine Mengen an Reagenzstoffen eingeregelt werden kann, um eine optimale Wasserqualität zu erhalten. Andererseits können sich Erkrankungen der Fische nur innerhalb eines aus zwei Fischbecken bestehenden Kreislaufs verbreiten, so dass durch eine auftretende Erkrankung in einem Fischbecken nur eine über-schaubare Population potentiell gefährdet sein kann.

Alternativ wird es durch die Anordnung der Fischbecken mit kurzen Strömungswegen ermöglicht, einen großen Wasserkreislauf herzustellen, in welchen alle sechs Fischbecken eingebunden sind. In diesem Fall wird jeweils das Haltungswasser aus dem Bypass des Sedimentationsbereichs eines Beckens einer Reihe in den Zulaufschacht eines Bioreaktorbereichs eines benachbarten Beckens der gleichen Reihe weitergeleitet wird und in den endseitigen Becken das Haltungswasser aus dem Bypass eines endseitigen Beckens einer Reihe in den Zulaufschacht (Bioreaktorbereich) des anderen endseitigen Beckens der anderen Reihe geleitet wird. Durch diese Art der Kreislaufverbindung der Fischbecken wird ein großer Wasserkreislauf bereitgestellt, was den Vorteil bietet, dass einerseits sowohl der messtechnische als auch der hinsichtlich der Zudosierung von Reagenzstoffen erforderliche Aufwand an Messleitungen reduziert werden kann, da im einfachsten Fall nur aus einem Fischbecken oder beispielsweise nur aus jedem dritten Fischbecken des großen Wasserkreislaufes Probenwasser entnommen werden muss und Reagenzstoffe einem solchen einzelnen Becken zugeführt werden müssen, um die Wasserqualität im gesamten Kreislauf zu messen und zu stabilisieren. Zum anderen weist diese Anordnung den Vorteil auf, dass ein insgesamt großes Wasservolumen im Kreislauf besteht, wodurch Schwankungen der Wasserparameter in einzelnen Fischbecken sich nicht in einer unmittelbaren Verschlechterung der Wasserqualität niederschlagen müssen, sondern durch die Wasservolumina in anderen Fischbecken ausgeglichen oder zumindest signifikant reduziert werden können.

Jedem Fischbecken sind jeweils zwei Ablaufleitungen für das Haltungswasser zugeordnet, wie beispielhaft anhand des rechts unten liegenden Beckens mit 14a, b beziffert. Dabei ist eine Ablaufleitung 14a, die als Überlauf und zur Schaumabscheidung dient, mit dem Bioreaktorbereich verbunden und ermöglicht eine Abfuhr von überschüssigem Wasser und von etwaig gebildetem Schaum aus dem Bioreaktorbereich und eine Ablaufleitung 14b ist mit dem Sedimentationsbereich verbunden und ermöglicht eine Ablaufwasserabfuhr aus dem Sedimentationsbereich.

Sämtliche Ablaufleitungen des Haltungswassers werden über einen oder mehrere Sammler zusammengeführt zu einer zentralen Ablaufleitung 20, die in eine Ablaufwasseraufbereitung 30 mündet. In dieser Ablaufwasseraufbereitung 30 wird das Ablaufwasser so weit aufbereitet, dass es geltende Umweltbestimmungen erfüllt und abschließend dem Oberflächenwasser direkt zugeführt werden kann. Das Ablaufwasser wird durch ein nicht dargestelltes Messsystem permanent auf die Gehalte an 02, Temperatur, NH₄, NO₃, NO₂ PO₄, Pges" TOC/CSB überprüft und gegebenenfalls durch bestimmte Maßnahmen, insbesondere hinsichtlich des Gesamtgehaltes an Phosphat und Stickstoff, beeinflusst.

Weiterhin ist eine Frischwasserzufuhrleitung 40 vorgesehen, welche sich über einen Verteiler in mehrere Frischwasserzufuhrleitungen 41-43 verzweigt, die jeweils in den Zulaufschacht des Bioreaktorbereichs der Becken 1-3 münden. Mit dieser Frischwasserzufuhr kann das durch die Ablaufleitungen und gfs. in anderer Weise abgeführte oder verlorene Wasser in jedem der drei Wasserkreisläufe kompensiert werden und somit ein konstanter Wasserpegel in den Fischbecken aufrechterhalten werden.

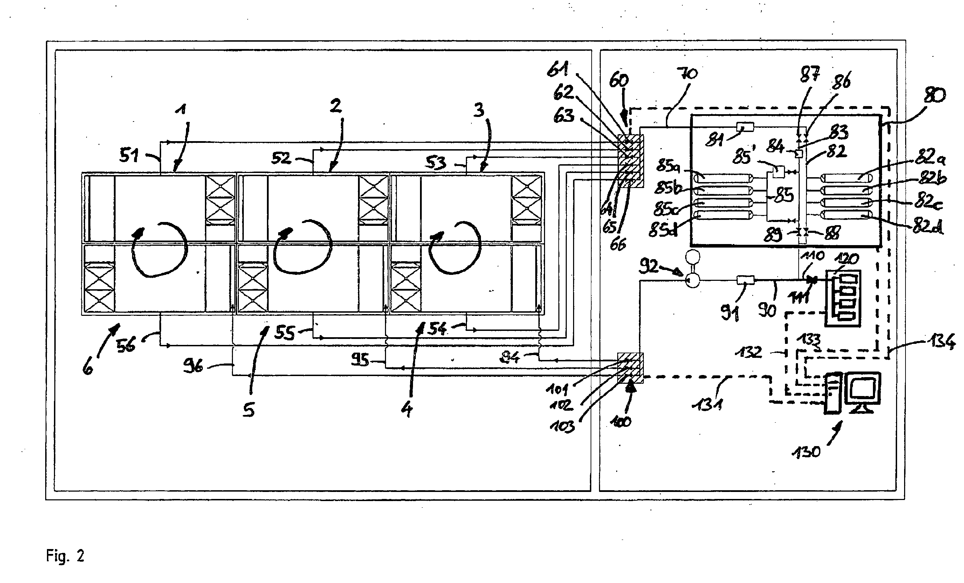

Figur 2 zeigt schematisch die für eine Wasseranalyse bevorzugt erforderlichen Bauteile der Fischbeckenanordnung gemäß Figur 1. Es ist zu beachten, dass die in Figur 1 gezeigte Wasserzirkulation funktional getrennt und unabhängig von der Probenwasserentnahme und Rückleitung ist, die in Figur 2 dargestellt ist.

Wie ersichtlich, weist jedes Fischbecken eine periphere Messleitung 51-56 auf, die jeweils in einen Multiplexer 60 mündet. Im Multiplexer 60 ist eine entsprechende Mehrzahl von Schrägsitz- bzw. Magnetventilen 61-66 angeordnet, die jeweils den Anschluss einer der peripheren Messleitungen 51-56 mit einer Sammelleitung innerhalb des Multiplexers 60 verbinden, die an eine zentrale Messleitung 70 angeschlossen ist.

Der Wasserfluss durch die zentrale Messleitung 70 wird durch einen Strömungswächter 81 überwacht, der innerhalb einer Messeinheit 80 angeordnet ist.

In Strömungsrichtung hinter dem Strömungswächter 81 verzweigt sich die zentrale Messleitung innerhalb der Messeinheit 80 in einen ersten Messzweig 82 und einen zweiten Messzweig 83. Die beiden Messzweige 82, 83 verlaufen parallel und werden nach Durchlaufen der Messeinheit wieder zu einer zentralen Rücklaufleitung 90 zusammengefasst.

Der erste Messzweig 82 ist mit einer Mehrzahl von physikalischen Sensoren verbunden, die in Reihe hintereinander in den Messzweig 82 eingeschaltet sind. Im Einzelnen sind ein Sauerstoff- + Temperatursensor 82a, ein pH-Sensor 82b, ein Leitfähigkeitssensor 82c und ein Gasdrucksensor 82d hintereinander an-geordnet, die das durch den Messzweig 82 strömende Probenwasser analysieren.

Der zweite Messzweig 83 durchläuft zunächst einen Filter 84 zur Permeaterzeugung und ist dann mittels eines weiteren Bypasses 85 an insgesamt vier nasschemische Messeinheiten angeschlossen, die in Reihe in den Bypass 85 eingeschaltet sind. Die nasschemischen Messeinheiten sind eine erste Messeinheit 85a zur Erfassung von NH₄/NO⁻₃/NO₂⁻/Nges, eine zweite Messeinheit 85b zur Erfassung von PO₄³⁻/Pges, eine Messeinheit 85c zur Erfassung des gesamten organischen Kohlenstoffgehalts (total organic carbon, TOC) und eine Messeinheit 85d zur Erfassung des Säurebindungsvermögen, welches hier insbesondere synonym für Karbonathärte steht (SBV; HCO₃⁻).

Die beiden Messzweige 82, 83 können durch entsprechend jeweils vorgeschaltete und nachgeschaltete Ventile 86, 87 und 88, 89 sowohl im Zulauf wie auch im Ablauf gesperrt werden. Dies ermöglicht eine Spülung der Messzweige. Zudem kann aus dem zweiten Messzweig 83 mittels eines Zu- und Ablaufventils 87', 89' das Probenwasser in den Bypass 85 geleitet werden, um es der diskontinuierli-chen nasschemischen Analyse durch die Messeinheiten 85a-d zuzuführen. Zu diesem Zweck ist im Bypass 85 ein Wasserreservoir 85' vorgesehen, welches einerseits durch Durchspülen des Bypasses 85 mit Probenwasser gespült und somit von Rückständen einer vorhergehenden Messung gereinigt werden kann und andererseits zur Vorbereitung der nasschemischen Analyse ein definiertes Wasservolumen, wie beispielsweise 5 Liter, aufnehmen kann. Aus diesem definierten Wasservolumen beziehen die einzelnen nasschemischen Messeinheiten 85a-d dann ein für deren Messung erforderliches Wasservolumen, beispielsweise jeweils 250ml. Der verbleibende Rest wird aus dem Wasserreservoir 85' dann über den Bypass 85 dem Ventil 89 der Rücklaufleitung 90 zugeführt. Die in den nasschemischen Messeinheiten 85a-d analysierten Probenwasseranteile werden verworfen und dem Abwasser zugeführt.

Auf diese Weise ist es einerseits möglich, eine Mischprobe aus einem laufenden Strom durch den Zweig 85 der nasschemischen Analyse zu unterziehen, um eine Echtzeitanalyse durchzuführen. Alternativ kann der Behälter 85' einmalig befüllt werden und dann Einzelproben hieraus entnommen und analysiert werden.

Nach Zusammenschluss der ersten und zweiten Messleitung 82, 83 in die Rücklaufleitung 90 mündet diese in einen zur Desinfektion dienenden Ozongenerator 91, der der Entkeimung des rücklaufenden Probenwassers dient. Eine hinter dem Ozongenerator 91 angeordnete Pumpe 92 ist als Druckpumpe ausgelegt und fördert das rücklaufende Probenwasser in die Fischbecken zurück. Diesbezüglich ist die gesamte Anordnung so angeordnet und ausgelegt, dass Probenwasser von den Fischbecken über den Multiplexer 60 bis in die Messeinheit 80 und weiter zur Pumpe 92 durch Schwerkrafteinfluss ohne Einfluss einer in diesen Strömungsgang eingeschalteten Pumpe fließt und somit die Druckpumpe 92 ohne jegliche Sogwirkung auf der Einlassseite mit dem Probenwasser beaufschlagt wird.

Das rücklaufende Probenwasser wird dann von der Pumpe 92 zu einem Multiplexer 100 geführt, der die zentrale Rücklaufleitung 90 auf drei periphere Rücklaufleitungen 94, 95, 96 aufteilt, die jeweils mittels separater Schrägsitz- bzw. Magnetventile 101-103 im Zulauf freigegeben oder gesperrt werden können. Die peripheren Rücklaufleitungen 94-96 münden in die Fischbecken 4-6, so dass eine gezielte Rückleitung des Probenwassers in eines dieser drei Becken mittels entsprechender Schaltungen der Schrägsitz- bzw. Magnetventile 101-103 im Multiplexer 100 möglich ist.

In die zentrale Rückführleitung 90 wird nicht nur das aus der Messeinheit 80 strömende Probenwasser zur Rückleitung in die Fischbecken eingeleitet, sondern zusätzlich ist eine Zudosierungsleitung 110 vorgesehen, die hinter der Zusammenführung der beiden parallelen Messzweige 82, 83 und vor der Förderpumpe 92 in die Rücklaufleitung mündet. Die Zudosierungsleitung 110 ist mittels eines Ventils 111 absperrbar und verbindet eine Zudosierungseinheit 120 mit der Rücklaufleitung. Aus der Zudosierungseinheit 120 können Reagenzstoffe in die Rücklaufleitung eingespeist werden, welche der Stabilisierung der Wasserqualität in den Fischbecken dienen. Die solcherart zudosierten Reagenzstoffe werden über die Rücklaufleitung dem Multiplexer 100 zugeführt und können dann mittels des Multiplexers gezielt über die peripheren Rücklaufleitungen 94-96 einem der Becken 4, 5 oder 6 zugeführt werden. Auf diese Weise kann gezielt ein Reagenzstoff jeweils einem der drei Wasserkreisläufe innerhalb der Fischbeckenanordnung zugeführt werden, um die Wasserqualität in diesem Wasserkreislauf zu regeln.

Sowohl die Zudosierungseinheit 120 als auch die Messeinheit 80, der Multiplexer 60 und der Multiplexer 100 sind signaltechnisch mit einer Regelungseinheit 130 gekoppelt, wie in Figur 2 durch unterbrochene Linien 131-134 dargestellt. Die Regelungseinheit 130 dient dazu, die von der Messeinheit 80 erfassten Messwerte jeweils einem Fischbecken bzw. einem aus zwei Fischbecken bestehenden Wasserkreislauf zuzuordnen, indem die jeweilige Stellung des Multiplexers 60 berücksichtigt wird und somit bestimmt werden kann, aus welchem Fischbecken das Probenwasser stammt, welches gemessen wurde. In der Regelungseinheit 130 sind Parameterbereiche abgespeichert, welche einer zulässigen, insbesondere optimalen Wasserqualität entsprechen. Zudem ist eine entsprechende Vergleichseinheit vorgesehen, welche die Messwerte mit diesem Parameterbereich vergleichen kann. Aus diesem Vergleich kann die Regelungseinheit 130 eine Abweichung feststellen und die hieraus resultierende Notwendigkeit der Zudosierung von Reagenzstoffen hinsichtlich deren Art und Menge bestimmen. Art und Menge von Reagenzstoffen werden an die Zudosierungseinheit 120 übermittelt und zugleich der Multiplexer 100 entsprechend solcherart geschaltet, dass die daraufhin von der Zudosierungseinheit 120 ausgehende Zudosierung von Reagenzstoffen dem entsprechenden Wasserkreislauf zugeführt wird. Auf diese Weise wird eine sichere und schnelle Regelung der Wasserqualität in einer automatisierten Weise für sämtliche Wasserkreisläufe innerhalb der Fischbeckenanordnung ermöglicht, ohne hierfür erhebliche Kosten in Sensorik und Leitung bzw. Verschaltungen investieren zu müssen.

## Patentansprüche

1. Fischbeckenanordnung, umfassend eine Vielzahl von Fischbecken (1-6) und eine Messvorrichtung (80) zur Erfassung von zumindest einem Wasserparameter des Haltungswassers innerhalb der Fischbecken, **dadurch gekennzeichnet, dass** die Messvorrichtung umfasst:
- eine Messeinheit (82a-d, 85a-d) zur Erfassung von dem zumindest einen Wasserparameter,
- eine schaltbare Probenwasserleitvorrichtung (60), die mittels einer Zentralmessleitung (70) mit der Messeinheit zur Weiterleitung von Probenwasser strömungstechnisch verbunden ist,
- eine Vielzahl von peripheren Messleitungen (51-56), von denen jede jeweils ein Fischbecken mit der schaltbaren Probenwasserleitvorrichtung zur Weiterleitung von Probenwasser strömungstechnisch verbindet,
- wobei die schaltbare Probenwasserleitvorrichtung (60) ausgebildet ist, um selektiv Probenwasser aus einer peripheren Messleitung (51-56) der Zentralmessleitung (70) zuzuführen.

2. Fischbeckenanordnung nach Anspruch 1,
**dadurch gekennzeichnet, dass** die Messeinheit
- zumindest einen physikalischen Messsensor (82a-d) umfasst, welcher einen Parameter des Probenwassers unmittelbar in ein elektrisches Signal umwandelt, insbesondere einen pH-Sensor, einen Sauerstoffsensor, einen Gasdrucksensor und/oder einen Temperatursensor, und/oder
- zumindest eine nasschemische Messeinheit (85a-d), welche einen Parameter des Probenwassers nach Zugabe zumindest eines Reagenz in ein elektrisches Signal umwandelt, insbesondere eine Messeinheit zur Erfassung des Phosphatgehalts, eine Messeinheit zur Erfassung des Hydrogencarbonatgehalts, eine Messeinheit zur Erfassung von Ammonium, Nitrit und Nitrat und des Gesamtstickstoffgehalts, und/oder eine Messeinheit zur Erfassung des Anteils an organischen Kohlenstoffverbindungen.

3. Fischbeckenanordnung nach Anspruch 1 oder 2,
**dadurch gekennzeichnet, dass** die Messeinheit über zumindest eine Rücklaufleitung (90) mit einem Fischbecken strömungstechnisch verbunden ist zur Rückführung des Probenwassers.

4. Fischbeckenanordnung nach Anspruch 3,
**gekennzeichnet durch** eine Desinfektionseinheit (91), insbesondere einen Ozongenerator, der in Strömungsrichtung zwischen Messeinheit und Fischbecken in die Rücklaufleitung eingesetzt ist zur Entkeimung des zurückströmenden Wassers.

5. Fischbeckenanordnung nach einem der vorhergehenden Ansprüche, **gekennzeichnet durch**
- eine schaltbare Rücklaufwasserleitvorrichtung (100), die mittels einer Zentralrücklaufleitung (90) mit der Messeinheit zur Rückleitung von Probenwasser strömungstechnisch verbunden ist,
- eine Vielzahl von peripheren Rücklaufleitungen (94-96), von denen jede die schaltbare Rücklaufwasserleitvorrichtung mit jeweils einem Fischbecken oder einem aus mehreren Fischbecken bestehenden Kreislauf zur Rückleitung von Probenwasser strömungstechnisch verbindet,
- wobei die schaltbare Rücklaufwasserleitvorrichtung (100) ausgebildet ist, um selektiv Probenwasser aus der Zentralrücklaufleitung (90) einer peripheren Rücklaufleitung (94-96) zuzuführen.

6. Fischbeckenanordnung nach einem der vorhergehenden Ansprüche, **dadurch gekennzeichnet, dass** die Fischbecken, peripheren Messleitungen und die Zentralmessleitung so angeordnet sind, dass die Zufuhr des Probenwassers aus den Fischbecken zur Messeinheit durch Schwerkrafteinfluss erfolgt und die Messvorrichtung in Strömungsrichtung vor einer Pumpe (92) zur Förderung dieses Probenwassers angeordnet ist, die als Druckpumpe ausgelegt ist.

7. Fischbeckenanordnung nach einem der vorhergehenden Ansprüche, **gekennzeichnet durch** eine Messteuerungseinheit, welche mit der schaltbaren Probenwasserleitvorrichtung und der Messeinheit signaltechnisch verbunden ist, und ausgebildet ist, um für jedes der Fischbecken, das über eine periphere Messleitung mit der schaltbaren Probenwasserleitvorrichtung strömungstechnisch verbunden ist, folgende aufeinanderfolgende Schritte auszuführen:
a. Senden eines ersten Schaltsignals an die schaltbare Probenwasserleitvorrichtung zur Durchleitung von Probenwasser aus der peripheren Messleitung des jeweiligen Fischbeckens in die Zentralmessleitung,
b. ggfs. Senden eines Startsignals an die Messeinheit zum Veranlassen einer Messung in der Messeinheit,
c. Erfassen der Messwerte der Messeinheit und Abspeichern und/oder Weiterleiten dieser Messwerte.
d. wobei die Messteuerungseinheit ausgebildet ist, um gegebenenfalls zuvor ein zweites Schaltsignal an die schaltbare Rücklaufwasserleitvorrichtung zu senden, zur Durchleitung von Probenwasser aus der Zentralrücklaufleitung an die dem jeweiligen Fischbecken zugeordnete periphere Rücklaufleitung, und
e. wobei die Messteuerungseinheit vorzugsweise eine Zeitverzögerungseinheit umfasst und ausgebildet ist, um zwischen dem Senden des ersten Schaltsignals und dem Senden des Startsignals eine **durch** die Zeitverzögerungseinheit vorbestimmte Zeitspanne verstreichen zu lassen, die ausreichend ist, um die Zentralmessleitung und die Messeinheit vollständig mit Probenwasser aus dem zu messenden Fischbecken zu füllen,
wobei die Messteuerungseinheit ausgebildet ist, um die Schritte a-c und ggfs. d und/oder e für jedes der Fischbecken aufeinanderfolgend durchzuführen.

8. Fischbeckenanordnung nach einem der vorhergehenden Ansprüche, **gekennzeichnet durch** eine Regeleinheit, welche mit der Messeinheit signaltechnisch verbunden ist, und ausgebildet ist, um die Messwerte der Messeinheit mit Sollwerten zu vergleichen und bei Abweichen der Messwerte von den Sollwerten ein Signal auszugeben, das signalisiert, welcher Messwert abweichend ist.

9. Fischbeckenanordnung nach Anspruch 8,
**dadurch gekennzeichnet, dass** die Regeleinheit ausgebildet ist, um eine Stellgröße für eine Stoffzufuhr zu dem gemessenen Fischbecken auszugeben, die so ausgebildet ist, dass bei Zugabe des Stoffes zu dem Fischbecken der gemessene Parameter in Richtung des Sollwerts, vorzugsweise auf den Sollwert verändert wird, wobei die Regeleinheit vorzugsweise mit einer Dosiereinheit zur Zudosierung des Stoffes signaltechnisch gekoppelt ist.

10. Fischbeckenanordnung nach Anspruch 8 oder 9,
**dadurch gekennzeichnet, dass** die Mehrzahl von Fischbecken oder einige der Fischbecken zu einem quasi-geschlossenen Wasserkreislauf miteinander verbunden sind und die Regeleinheit ausgebildet ist, um eine Stellgröße für eine Stoffzufuhr zu einem Fischbecken auszugeben, welches dem gemessenen Fischbecken im Wasserkreislauf strömungstechnisch unmittelbar vorausgeht, wobei die Regeleinheit vorzugsweise mit einer Dosiereinheit zur Zudosierung des Stoffes zu dem Fischbecken, welches dem gemessenen Fischbecken im Wasserkreislauf strömungstechnisch unmittelbar vorausgeht, signaltechnisch gekoppelt ist.

11. Fischbeckenanordnung nach einem der vorhergehenden Ansprüche
mit einer Rücklaufleitung zur Rückführung des Probenwassers,
**dadurch gekennzeichnet, dass** eine Zuleitung zur Zudosierung von Reagenzstoffen zur Regelung der Wasserqualität in die Rücklaufleitung mündet, vorzugsweise in Strömungsrichtung vor einer schaltbaren Rücklaufwasserteitvorrichtung, welche selektiv rücklaufendes Probenwasser in eine von einer Vielzahl peripherer Rücklaufleitungen leitet und diese insbesondere mit einer automatisierten Zudosierungseinheit verbindet.

12. Verwendung einer Messvorrichtung für eine Anordnung einer Vielzahl von Fischbecken zum Erfassen von Wasserparametern des Wassers der Fischbecken,
**dadurch gekennzeichnet, dass** die Messvorrichtung umfasst:
- eine Messeinheit zur Erfassung von zumindest einem Wasserparameter
- eine schaltbare Probenwasserleitvorrichtung, die mittels einer Zentralmessleitung mit der Messeinheit zur Weiterleitung von Probenwasser strömungstechnisch verbunden ist und die eine Vielzahl von Messleitungsanschlüssen aufweist, die ausgebildet sind, um mit einer Vielzahl von peripheren Messleitungen, von denen jede jeweils ein Fischbecken mit der schaltbaren Wasserleitvorrichtung zur Weiterleitung von Probenwasser strömungstechnisch verbindet, verbunden zu werden,
- wobei die schaltbare Probenwasserleitvorrichtung ausgebildet ist, um selektiv Probenwasser aus einer peripheren Messleitung der Zentralmessleitung zuzuführen.

13. Verfahren zur Überwachung einer Mehrzahl von Fischbecken, mit den Schritten:
a. Schalten der schaltbaren Probenwasserleitvorrichtung zur Weiterleitung des Probenwassers aus einer peripheren Probenwasserleitung in eine Zentralmessleitung,
b. Leiten von Probenwasser aus einem Fischbecken über die periphere Probenwasserleitung und die Zentralmessleitung zu einer Messeinheit
c. Messen von zumindest einem Wasserparameter des Fischbeckens in der Messeinheit,
d. ggfs. Rückleiten des Probenwassers in das Fischbecken,
e. Schalten der schaltbaren Probenwasserleitvorrichtung zur Weiterleitung des Probenwassers aus einer weiteren peripheren Probenwasserleitung in die Zentralmessleitung,
f. Leiten von Probenwasser aus einem weiteren Fischbecken über die weitere periphere Probenwasserleitung zu der Messeinheit,
g. Messen von zumindest einem Wasserparameter des weiteren Fischbeckens in der Messeinheit,
h. ggfs. Rückleiten des Probenwassers in das weitere Fischbecken.

14. Verfahren nach Anspruch 13,
**dadurch gekennzeichnet, dass** zwischen dem Schalten der schaltbaren Probenwasserleitvorrichtung und dem Messen des zumindest einen Wasserparameters eine vorbestimmte Zeitverzögerung erfolgt, die ausreichend ist, um die Messeinheit vollständig mit Probenwasser aus dem zu messenden Fischbecken zu füllen.

## Claims

1. Fish tank arrangement comprising a multiplicity of fish tanks (1-6) and a measuring device (80) for recording at least one water parameter of the rearing water inside the fish tanks,
**characterised in that** the measuring device comprises:
- a measuring unit (82a-d, 85a-d) for recording at least one water parameter,
- a switchable sample water guide device (60) which is fluidically connected by means of a central measuring line (70) to the measuring unit for forwarding sample water,
- a multiplicity of peripheral measuring lines (51-56), each of which in each case fluidically connects a fish tank to the switchable sample water guide line for forwarding sample water,
- wherein the switchable sample water guide device (60) is developed to selectively deliver sample water from a peripheral measuring line (51-56) to the central measuring line (70).

2. Fish tank arrangement according to claim 1, **characterised in that** the measuring unit
- comprises at least one physical measuring sensor (82a-d) which converts a parameter of the sample water directly into an electrical signal, in particular a pH sensor, an oxygen sensor, a gas pressure sensor and/or a temperature sensor, and/or
- at least one wet chemistry measuring unit (85a-d) which converts a parameter of the sample water after addition of at least one reagent into an electrical signal, in particular a measuring unit for recording the phosphate content, a measuring unit for recording the hydrogen carbonate content, a measuring unit for recording ammonium, nitrite and nitrate and the total nitrogen content, and/or a measuring unit for recording the level of organic carbon compounds.

3. Fish tank arrangement according to claim 1 or 2, **characterised in that** the measuring unit is fluidically connected to a fish tank via at least one return line (90) to return the sample water.

4. Fish tank arrangement according to claim 3, **characterised by** a disinfection unit (91), in particular an ozone generator, which is installed in the return line in the direction of flow between the measuring unit and the fish tank to sterilise the back-flowing water.

5. Fish tank arrangement according to one of the preceding claims, **characterised by**
- a switchable return water guide device (100) which is fluidically connected to the measuring unit by means of a central return line (90) to return sample water,
- a multiplicity of peripheral return lines (94-96), each of which fluidically connects the switchable return water guide device to in each case a fish tank or a cycle consisting of a plurality of fish tanks, to return sample water,
- wherein the switchable return water guide device (100) is developed to selectively deliver sample water from the central return line (90) to a peripheral return line (94-96).

6. Fish tank arrangement according to one of the preceding claims, **characterised in that** the fish tanks, peripheral measuring lines and central measuring line are arranged so that the sample water is delivered from the fish tank to the measuring unit by the effect of gravity and the measuring device is arranged in the direction of flow before a pump (92), which is designed as a pressure pump, to convey this sample water.

7. Fish tank arrangement according to one of the preceding claims, **characterised by** a measurement control unit which is connected by signals to the switchable sample water guide device and the measuring unit and is developed to perform the following consecutive steps for each of the fish tanks which is fluidically connected to the switchable sample water guide device via a peripheral measuring line:
a. sending a first switch signal to the switchable sample water guide device to pass sample water from the peripheral measuring line of the respective fish tank into the central measuring line,
b. if necessary, sending a start signal to the measuring unit to initiate a measurement in the measuring unit,
c. recording the measured values of the measuring unit and storing and/or forwarding these measured values,
d. wherein the measurement control unit is developed to if necessary previously send a second switch signal to the switchable return water guide device to pass sample water from the central return line to the peripheral return line allocated to the respective fish tank, and
e. wherein the measurement control unit preferably comprises a time delay unit and is developed to allow a period of time, predetermined by the time delay unit, between sending the first switch signal and sending the start signal to elapse, which period of time is sufficient to fill the central measuring line and the measuring unit completely with sample water from the fish tank to be measured,
wherein the measurement control unit is developed to perform steps a-c and if necessary d and/or e for each of the fish tanks in succession.

8. Fish tank arrangement according to one of the preceding claims, **characterised by** a control unit which is connected by signals to the measuring unit and is developed to compare the measured values of the measuring unit with nominal values and, if the measured values deviate from the nominal values, to emit a signal that indicates which measured value is the one that deviates.

9. Fish tank arrangement according to claim 8, **characterised in that** the control unit is developed to emit a controlled variable for a material feed to the measured fish tank which is developed so that on addition of the material to the fish tank, the measured parameter is changed towards the nominal value, preferably to the nominal value, wherein the control unit is preferably coupled by signals to a metering unit to feed the material.

10. Fish tank arrangement according to claim 8 or 9, **characterised in that** the plurality of fish tanks or some of the fish tanks are connected with one another to a quasi-closed water cycle and the control unit is developed to provide a controlled variable for a material feed to a fish tank which proceeds fluidically directly to the measured fish tank in the water cycle, wherein the control unit is coupled by signals preferably to a metering unit to feed the material into the fish tank, which proceeds fluidically directly to the measured fish tank in the water cycle.

11. Fish tank arrangement according to one of the preceding claims with a return line to return the sample water,
**characterised in that** a delivery line to feed reagent materials to control the water quality passes into the return line, preferably in the direction of flow before a switchable return water guide device, which selectively passes returning sample water into one of a multiplicity of peripheral return lines and connects this in particular to an automated feed unit.

12. Use of a measuring device for an arrangement of a multiplicity of fish tanks to record water parameters of the water in the fish tanks, **characterised in that** the measuring device comprises:
- a measuring unit to record at least one water parameter
- a switchable sample water guide device which is fluidically connected to the measuring unit by means of a central measuring line to forward sample water and which has a multiplicity of measuring line connections which are developed to be connected to a multiplicity of peripheral measuring lines, each of which respectively fluidically connects a fish tank to the switchable water guide device to forward sample water,
- wherein the switchable sample water guide device is developed to selectively deliver sample water from a peripheral measuring line to the central measuring line.

13. Method for monitoring a plurality of fish tanks, with the steps:
a. switching the switchable sample water guide device to forward the sample water from a peripheral sample water line into a central measuring line,
b. passing sample water from a fish tank via the peripheral sample water line and the central measuring line to a measuring unit
c. measuring at least one water parameter of the fish tank in the measuring unit,
d. if necessary returning the sample water into the fish tank,
e. switching the switchable sample water guide device to forward the sample water from a further peripheral sample water line into the central measuring line,
f. passing sample water from a further fish tank via the further peripheral sample water line to the measuring unit,
g. measuring at least one water parameter of the further fish tank in the measuring unit,
h. if necessary returning the sample water into the further fish tank.

14. Method according to claim 13,
**characterised in that** between switching the switchable sample water guide device and measuring the at least one water parameter there is a predetermined time delay which is sufficient to fill the measuring unit completely with sample water from the fish tank to be measured.

## Revendications

1. Arrangement de bassins à poissons, comprenant un grand nombre de bassins à poissons (1-6) et un dispositif de mesure (80) pour acquérir au moins un paramètre de l'eau d'élevage à l'intérieur des bassins à poissons, **caractérisé en ce que** le dispositif de mesure comprend :
- une unité de mesure (82a-d, 85a-d) pour acquérir le ou les paramètres de l'eau,
- un dispositif commutable (60) de guidage de l'eau échantillon, qui est relié par liaison fluidique, à l'aide d'au moins une ligne centrale de mesure (70), à l'unité de mesure pour redirection de l'eau échantillon,
- un grand nombre de lignes de mesure périphériques (51-56), dont chacune relie par liaison fluidique un bassin à poissons au dispositif commutable de guidage de l'eau échantillon, pour redirection de l'eau échantillon,
- le dispositif commutable (60) de guidage de l'eau échantillon étant configuré de façon à amener sélectivement de l'eau échantillon, d'une ligne de mesure périphérique (51-56) à la ligne de mesure centrale (70).

2. Arrangement de bassins à poissons selon la revendication 1, **caractérisé en ce que** l'unité de mesure comprend
- au moins un capteur de mesure physique (82a-d), qui convertit un paramètre de l'eau échantillon directement en un signal électrique, en particulier un capteur de pH, un capteur d'oxygène, un capteur de pression gazeuse et/ou un capteur de température, et/ou
- au moins un unité de mesure (85a-d) fonctionnant par voie chimique à l'état humide, qui convertit en un signal électrique un paramètre de l'eau échantillon après addition d'au moins un réactif, en particulier une unité de mesure pour acquérir la teneur en phosphates, une unité de mesure pour acquérir la teneur en hydrogénocarbonates, une unité de mesure pour acquérir la teneur en ammonium, en nitrites et en nitrates et la teneur en azote total, et/ou une unité de mesure pour acquérir la portion des composés carbonés organiques.

3. Arrangement de bassins à poissons selon la revendication 1 ou 2, **caractérisé en ce que** l'unité de mesure est reliée par liaison fluidique par l'intermédiaire d'au moins une conduite de recyclage (90) à un bassin à poissons, pour le retour de l'eau échantillon.

4. Arrangement de bassins à poissons selon la revendication 3, **caractérisé par** une unité de désinfection (91), en particulier un générateur d'ozone, qui, dans la direction de l'écoulement entre l'unité de mesure et les bassins à poissons, est inséré dans la conduite de recyclage, pour stériliser l'eau de retour.

5. Arrangement de bassins à poissons selon l'une des revendications précédentes, **caractérisé par**
- un dispositif commutable (100) de guidage de l'eau de recyclage, qui est relié par liaison fluidique à l'aide d'une conduite de recyclage centrale (90) à l'unité de mesure pour le retour de l'eau échantillon,
- un grand nombre de conduites périphériques de recyclage (94-96), dont chacune relie par liaison fluidique le dispositif commutable de guidage de l'eau de recyclage à chacun des bassins à poissons, ou à un circuit constitué de plusieurs bassins à poissons, pour assurer le retour de l'eau échantillon,
- dans lequel le dispositif commutable (100) de guidage de l'eau de recyclage est configuré pour amener sélectivement de l'eau échantillon de la conduite de recyclage centrale (90) à une conduite de recyclage périphérique (94-96).

6. Arrangement de bassins à poissons selon l'une des revendications précédentes, **caractérisé en ce que** les bassins à poissons, les lignes de mesure périphériques et la ligne de mesure centrale sont arrangées de telle sorte que l'amenée de l'eau échantillon, des bassins à poissons à l'unité de mesure, s'effectue sous l'influence de la force de gravité, et que le dispositif de mesure est disposé, dans la direction de l'écoulement, en amont d'une pompe (92) pour refouler cette eau échantillon, qui est configurée comme une pompe refoulante.

7. Arrangement de bassins à poissons selon l'une des revendications précédentes, **caractérisé par** une unité de commande de mesure, qui est reliée par liaison utilisant la technique des signaux au dispositif commutable de guidage de l'eau échantillon et à l'unité de mesure, et qui est configurée de façon à exécuter les étapes successives suivantes pour chacun des bassins à poissons qui, par l'intermédiaire d'une ligne de conduite périphérique, est relié par liaison fluidique au dispositif commutable de guidage de l'eau échantillon :
a. émission d'un premier signal de commutation au dispositif commutable de guidage de l'eau échantillon, pour faire transiter l'eau échantillon de la ligne de mesure périphérique du bassin à poissons considéré à la ligne de mesure centrale,
b. éventuellement, émission d'un signal de démarrage à l'unité de mesure pour provoquer une mesure dans l'unité de mesure,
c. acquisition des valeurs de mesure de l'unité de mesure et mémorisation et/ou redirection de ces valeurs de mesure,
d. l'unité de commande de mesure étant configurée pour émettre éventuellement au préalable un deuxième signal de commutation au dispositif commutable de guidage de l'eau de recyclage, pour permettre la redirection de l'eau échantillon, de la conduite de recyclage centrale à la conduite de recyclage périphérique affectée au bassin à poissons considéré, et
e. l'unité de commande de mesure comprenant de préférence une unité de temporisation et étant configurée de façon à permettre de s'écouler un laps de temps, prédéfini par l'unité de temporisation, entre l'émission du premier signal de commutation et l'émission du signal de départ, ce laps de temps étant suffisant pour remplir complètement la ligne de mesure centrale et l'unité de mesure avec l'eau échantillon provenant du bassin à poissons devant faire l'objet de la mesure,
l'unité de commande de mesure étant configurée pour mettre en oeuvre successivement les étapes a-c et éventuellement d et/ou e pour chacun des bassins à poissons.

8. Arrangement de bassins à poissons selon l'une des revendications précédentes, **caractérisé par** une unité de régulation qui est reliée à l'unité de mesure par liaison utilisant la technique des signaux, et est configurée pour comparer les valeurs de mesure de l'unité de mesure à des valeurs prescrites, et, en présence d'un écart entre les valeurs de mesure et les valeurs prescrites, envoyer en sortie un signal qui indique laquelle des valeurs de mesure s'écarte des valeurs de prescrites.

9. Arrangement de bassins à poissons selon la revendication 8, **caractérisé en ce que** l'unité de régulation est configurée de façon à envoyer en sortie une variable réglante pour un apport de matière au bassin à poissons faisant l'objet de la mesure, qui est configurée de telle sorte que, lors de l'addition de la matière au bassin à poissons, le paramètre mesuré varie dans la direction de la valeur prescrite, de préférence jusqu'à la valeur prescrite, l'unité de régulation étant de préférence couplée, par liaison utilisant la technique des signaux, à une unité de dosage, pour doser la matière.

10. Arrangement de bassins à poissons selon la revendication 8 ou 9, **caractérisé en ce que** la majorité des bassins à poissons, ou quelques-uns des bassins à poissons, sont reliés les uns aux autres pour former un circuit d'eau quasi fermé, et l'unité de régulation est configurée de façon à envoyer en sortie une variable réglante pour l'amenée de matière à un bassin à poissons, qui d'un point de vue fluidique se trouve immédiatement en amont du bassin à poissons faisant l'objet de la mesure dans le circuit d'eau, l'unité de régulation étant de préférence couplée par liaison utilisant la technique des signaux à une unité de dosage pour doser la matière dans le bassin à poissons qui d'un point de vue fluidique se trouve immédiatement en amont du bassin à poissons faisant l'objet de la mesure dans le circuit d'eau.

11. Arrangement de bassins à poissons selon l'une des revendications précédentes, comportant une conduite de recyclage pour le retour de l'eau échantillon, **caractérisé en ce qu'**une conduite d'amenée, destinée à doser des réactifs dans le but de réguler la qualité de l'eau, débouche dans la conduite de recyclage, de préférence dans la direction de l'écoulement en amont du dispositif commutable de guidage de l'eau de recyclage, qui envoie sélectivement l'eau échantillon à recycler dans l'une d'un grand nombre de conduites de recyclage périphériques, et qui relie cette dernière en particulier à une unité de dosage automatisée.

12. Utilisation d'un dispositif de mesure pour un arrangement d'un grand nombre de bassins à poissons pour acquérir des paramètres de l'eau des bassins à poissons,
**caractérisée en ce que** le dispositif de mesure comprend :
- une unité de mesure pour acquérir au moins un paramètre de l'eau,
- un dispositif commutable de guidage de l'eau échantillon, qui à l'aide d'une ligne de mesure centrale est relié par une liaison fluidique à l'unité de mesure pour rediriger l'eau échantillon, et qui comprend un grand nombre de connexions de lignes de mesure, qui sont configurées pour être reliées à un grand nombre de lignes de mesure périphériques, dont chacune relie par une liaison fluidique chacun des bassins à poissons au dispositif commutable de guidage de l'eau, pour redirection de l'eau échantillon,
- le dispositif commutable de guidage de l'eau échantillon étant configuré pour amener sélectivement l'eau échantillon d'une ligne de mesure périphérique de la ligne de mesure centrale.

13. Procédé pour surveiller un grand nombre de bassins à poissons, comportant les étapes suivantes :
a. commutation du dispositif commutable de guidage de l'eau échantillon pour redirection de l'eau échantillon, d'une conduite périphérique d'eau échantillon à une ligne de mesure centrale,
b. envoi de l'eau échantillon à une unité de mesure, à partir d'un bassin à poissons, en passant par la conduite périphérique d'eau échantillon et par la ligne de mesure centrale,
c. mesure d'au moins un paramètre de l'eau du bassin à poissons dans l'unité de mesure,
d. éventuellement, renvoi de l'eau échantillon dans le bassin à poissons,
e. commutation du dispositif commutable de guidage de l'eau échantillon pour redirection de l'eau échantillon dans la ligne de mesure centrale à partir d'une autre conduite périphérique d'eau échantillon,
f. envoi de l'eau échantillon à l'unité de mesure à partir d'un autre bassin à poissons, en passant par l'autre conduite périphérique supplémentaire d'eau échantillon,
g. mesure d'au moins un paramètre de l'eau de l'autre bassin à poissons dans l'unité de mesure,
h. éventuellement, renvoi de l'eau échantillon dans l'autre bassin à poissons.

14. Procédé selon la revendication 13, **caractérisé en ce qu'**entre la commutation du dispositif commutable de guidage de l'eau échantillon et la mesure d'au moins un paramètre de l'eau, on procède à une temporisation prédéfinie, qui est suffisante pour remplir complètement l'unité de mesure d'eau échantillon provenant du bassin à poissons devant faire l'objet de la mesure.
